# FASCICULE DE BREVET EUROPEEN

(11) **EP 3 545 262 B1**
(45) Date de publication et mention de la délivrance du brevet: **14.10.2020**
(21) Numéro de dépôt: 17811877.4
(22) Date de dépôt: 24.11.2017
(51) Int. Cl.: G01C 11/02, G01B 11/245, G06T 17/00

(54) **SYSTÈME ET PROCÉDÉ DE NUMÉRISATION TRIDIMENSIONNELLE D'UN OBJET**
SYSTEM UND VERFAHREN ZUR DREIDIMENSIONALEN DIGITALISIERUNG EINES OBJEKTS
SYSTEM AND METHOD FOR THREE-DIMENSIONAL DIGITALISATION OF AN OBJECT

(30) Priorité: 28.11.2016 FR 1670714
(43) Date de publication de la demande: 02.10.2019
(73) Titulaire: Centre National de la Recherche Scientifique (CNRS), 75794 Paris Cedex 16 (FR)
(72) Inventeur: GATTET, Eloi, 13005 Marseille (FR)
(74) Mandataire: Marks & Clerk France
(86) Numéro de dépôt international: PCT/EP2017/080413
(87) Numéro de publication internationale: WO 2018/096116

(56) Documents cités:
- WO-A1-2010/015086
- WO-A1-2016/039955
- DE-U1-202014 010 159
- Infinite realities: "Next Generation Photometric Scanning", , 29 mars 2016 (2016-03-29), XP002772599, Extrait de l'Internet: URL:http://ir-ltd.net/next-gen-photometric -scanning/ [extrait le 2017-07-28] cité dans la demande

## Description

### DOMAINE DE L'INVENTION

La présente invention concerne un système pour l'acquisition de données d'images destinées à la réalisation de modèles tridimensionnels d'un objet par photogrammétrie. Elle concerne en outre un procédé de numérisation tridimensionnelle d'un tel objet.

### ART ANTERIEUR

La photogrammétrie est une technique qui consiste à effectuer des mesures dans une scène, en utilisant la parallaxe obtenue entre des images acquises selon des points de vue différents. La photogrammétrie exploite des calculs de corrélation dense entre des images désormais numériques. Elle repose sur une numérisation rigoureuse de la géométrie des objets et de leur acquisition afin de reconstituer une représentation numérique tridimensionnelle fidèle de la réalité.

Pour la réalisation d'un modèle tridimensionnel d'un objet par photogrammétrie, on acquiert de multiples images photographiques de cet objet, selon différents angles de vue. En pratique, ces multiples images photographiques de l'objet doivent être prises selon au moins 50 angles de vue différents de l'objet.

Les modèles tridimensionnels selon l'invention sont des modèles pour lesquels la géométrie d'un objet est acquise, avantageusement sa texture, ainsi que sa réflectance. La texture est la représentation de la surface d'un objet, incluant, pour chacun des points, de cette surface, leur couleur. La réflectance, également nommée facteur de réflexion, est la proportion de lumière réfléchie par la surface de l'objet. Elle concerne les propriétés optiques de la surface. Il s'agit donc d'un rapport entre le flux lumineux réfléchi et le flux lumineux incident. Pour l'acquisition de la réflectance de l'objet, les images photographiques sont obtenues avec des lumières incidentes différentes.

Concernant une méthodologie d'acquisition de données d'images pour la réalisation de modèles tridimensionnels d'un objet par photogrammétrie, on pourra par exemple se reporter au document "Infinité realities: Next Génération Photometric Scanning, 29 mars 2016 (2016-03-29), XP002772599, Extrait de l'internet (2017-07-28): http://ir-ldt.net/next-gen-photometric-scanning/.

On pourra aussi se reporter aux documents WO 2010/0150086 (CREAFORM Inc & al.) ou au document WO 2016/039955 (FARO TECH Inc), qui décrivent des modules photogrammétriques pour la réalisation de tels modèles tridimensionnels.

Selon l'art antérieur, pour l'acquisition des données d'images l'objet est déplacé et l'appareil photographique reste fixe, ou alors, l'appareil photographique est déplacé et l'objet reste fixe.

Le document intitulé « A versatile and low-cost 3D acquisition and processing pipeline for collecting mass of archaelogical findings on the field », E. Gattet et al., The International Archives of the Photogrammetry, Remote Sensing and Spatial Information Sciences, Vol. XL-5/W4, 2015, divulgue notamment un système de numérisation transportable et de faible coût, qui a été spécifiquement développé pour l'acquisition de modèles tridimensionnels d'objets de dimensions inférieures à 60 cm et pesant moins de 20 kg. Ce système est muni de trois appareils photographiques. Ces appareils sont positionnés fixes à la périphérie d'un plateau tournant. L'objet est placé au centre du plateau tournant. Lorsque le plateau est mis en rotation, des images multiples de l'objet sont acquises selon différents points de vue, dans un temps minimal, en pratique de l'ordre de quelques minutes.

Néanmoins, le système précité nécessite un mouvement relatif de l'objet par rapport aux appareils photographiques. De tels mouvements relatifs sont susceptibles d'être à l'origine de dégradations des objets, bien souvent inestimables, et sont de ce fait exclus par les musées dépositaires desdits objets.

Le document DE 202014010159 U1 divulgue un système destiné à générer un modèle tridimensionnel d'un corps en mouvement, par exemple d'une personne, selon un procédé photogrammétrique. Le système comprend une structure géométrique tridimensionnelle délimitant un volume intérieur pour le positionnement du corps dans le volume de la structure. La structure géométrique est porteuse à cet effet de modules photogrammétriques pour réaliser un modèle tridimensionnel du corps.

Cependant, le système décrit par le document DE 202014010159 U1 n'est pas démontable ni transportable, au moins rapidement et avec aisance. L'objet n'est pas fixe dans le système. Il ne permet pas d'acquérir des images de la personne selon au moins 50 points de vue. Il n'autorise pas l'acquisition de la réflectance du corps à modéliser.

### RESUME DE L'INVENTION

Compte tenu de ce qui précède, un problème que ce propose de résoudre l'invention est de réaliser un système pour l'acquisition, dans un temps limité, de données d'images destinées à la réalisation de modèles tridimensionnels d'un objet incluant la géométrie, la texture de l'objet ainsi que sa réflectance, selon au moins 50 points de vue différents, l'objet étant notamment un artéfact, qui n'implique pas de mouvement relatif des dispositifs de prise de vue et de l'objet, et qui soit transportable.

La solution de l'invention à ce problème a pour premier objet un système de numérisation pour l'acquisition de données d'images selon la revendication 1 et un procédé selon la revendication 7.

Autrement dit, la structure géométrique tridimensionnelle de l'invention est typiquement configurée en une ossature délimitant un volume à l'intérieur duquel est placé l'objet dont le modèle tridimensionnel est à obtenir. L'ossature est porteuse d'une pluralité d'appareillages photographiques pour acquérir des images de l'objet à partir duquel est obtenu le modèle tridimensionnel. Un tel système, ou ossature, est classiquement agencé en réseau maillé comprenant des barres concourantes qui ménagent entre-elles les mailles du réseau. Les nœuds d'un tel réseau maillé sont formés par les zones de croisement des barres entre-elles.

Dans le contexte de l'invention, les appareillages photographiques ménagent globalement au moins 50 modules photographiques montés sur la structure. Chaque appareillage photographique comprend un boîtier central et au moins un boîtier satellite relié audit module central. Chaque boîtier, central et satellite, de chacun des appareillages photographiques comprend au moins un module photographique et une source lumineuse.

Par ailleurs, lesdits nœuds du réseau maillé formé par la structure, ou ossature, sont formés par les appareillages photographiques comprenant chacun des modules photographiques qui sont équipés desdits moyens d'assemblage amovibles, via lesquels le système, ou autrement dit l'ossature, et/ou les modules photographiques composant chacun des appareillages photographiques et formant les nœuds de la structure, peuvent être rapidement et aisément montés ou démontés.

De manière avantageuse, - l'objet est un artéfact ; - les boîtiers satellites sont équidistants du boîtier central, et positionnés sensiblement à égale distance d'un de l'autre ; - chaque nœud comprend un boîtier central et trois boitiers satellites ; - les boîtiers centraux et les boîtiers satellites comprennent un module photographique, une source lumineuse et les modules centraux comprennent en outre une seconde source lumineuse ; - les moyens d'assemblage amovibles sont des barres munies de moyens pour l'alimentation électrique des boîtiers, et d'une connectique associée ; - les nœuds sont arrangés pour former un polyèdre ; - le polyèdre est un dodécaèdre régulier ; et - qu'on acquiert en outre la réflectance de l'objet.

Autrement dit, les moyens d'assemblage amovibles, notamment formés par les barres, sont configurés en organes de jonction facilement réversible des nœuds entre eux et/ou entre les boîtiers que comprennent chacun des nœuds. Les barres reliant les nœuds entre eux forment ainsi les mailles de la structure. Les boîtiers que comprennent chacun des nœuds sont aussi assemblés entre eux via les moyens d'assemblage amovibles pour former les divers appareillages photographiques.

Plus précisément, les barres d'un premier groupe de barres, ou dites des barres de liaison, forment les branches des mailles du réseau maillé formé par la structure, en étant assemblées entre elles via les boîtiers que comprennent chacun des appareillages photographiques formant les nœuds de la structure. Autrement dit, les barres du premier groupe de barres forment un premier moyen de jonction des nœuds entre eux et par suite forment les mailles de la structure.

Les barres d'un deuxième groupe de barres, ou dites tiges de liaison, forment un deuxième moyen de jonction réversible entre les boîtiers que comprennent chacun des nœuds, ou appareillages photographiques, pour le montage ou le démontage de composants de chacun des nœuds, notamment les boîtiers qu'ils comprennent les uns des autres.

### BREVE DESCRIPTION DES FIGURES

L'invention sera mieux comprise à la lecture de la description non limitative qui suit, rédigée au regard des dessins annexés, dans lesquels :
la figure 1 montre, en perspective, un système pour l'acquisition de données d'images selon l'invention ;
la figure 2 montre, en perspective, un nœud d'un système d'acquisition de données d'images selon l'invention ;
la figure 3 présente le nœud de la figure 2, en vue éclatée ; et
la figure illustre, de manière schématique, les différents éléments contenus dans les boîtiers du système selon l'invention.

### DESCRIPTION DETAILLEE DE L'INVENTION

L'invention concerne un système d'acquisition de donnés d'images et de traitement par photogrammétrie. Un tel système permet d'acquérir des données d'images destinées à la réalisation de modèles tridimensionnels d'un objet. Le modèle tridimensionnel de l'objet comprend au moins la géométrie de cet objet, ainsi que sa texture. Il comprend en outre avantageusement la réflectance de l'objet.

Les objets visés dans la présente invention sont notamment des artéfacts ou d'autres objets quelconques. Il peut également s'agir de personnes entières, ou de parties de corps de telles personnes, par exemple, le buste ou le visage. Les objets selon l'invention ne sont pas des objets qui sont purement transparents.

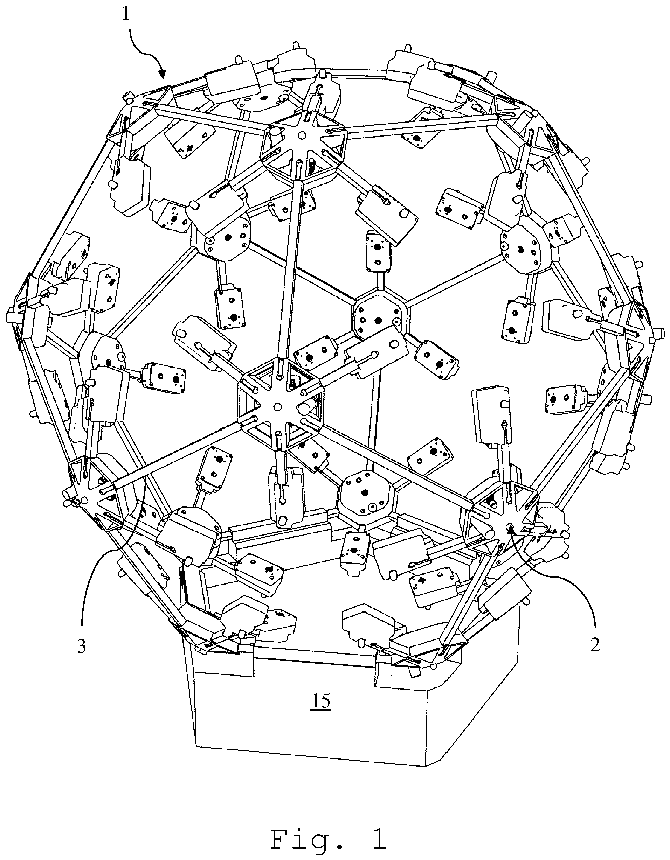

Le système selon l'invention forme une structure géométrique tridimensionnelle. Cette structure géométrique tridimensionnelle est notamment agencée en une ossature configurée en réseau maillé qui délimite un volume intérieur. L'objet est positionné fixe dans ce volume intérieur. La structure géométrique est composée d'au moins 12 nœuds et, préférentiellement, d'au moins 20 nœuds. Ces nœuds définissent des sommets de la structure ou autrement dit les zones de jonction entre elles des mailles de l'ossature. Préférentiellement, le système selon l'invention présente une structure polyédrique. Les nœuds définissent alors les sommets de la structure polyédrique. Dans l'exemple présenté à la figure 1, le système est référencé 1 dans son ensemble. Il présente une structure dodécaédrique sensiblement régulière. Il comporte ainsi 20 nœuds référencés 2, qui forment les sommets du dodécaèdre, lesdits nœuds 2 étant arrangés de manière sensiblement régulière à la surface du dodécaèdre. Ainsi, un nœud particulier est positionné à environ égale distance des nœuds qui l'entourent.

Les nœuds 2 de la structure sont notamment formés par des appareillages photographiques qui sont assemblés entre eux par des moyens d'assemblage, en pratique des barres 3 d'un premier groupe de barres, telles que par exemple des barres métalliques en aluminium, qui définissent les côtés des 12 faces pentagonales du dodécaèdre régulier. Les barres 3 du premier groupe de barres ont une même longueur, par exemple de l'ordre de 30 cm. Elles sont amovibles. Elles permettent l'assemblage de la structure, et son démontage. Elles assurent en outre l'alimentation électrique de la structure. Elles comportent donc à cet effet un câble électrique. Une base Wifi™ 15 est positionnée à la base de la structure polyédrique. Cette base 15 crée un réseau sans fil au sein de la structure.

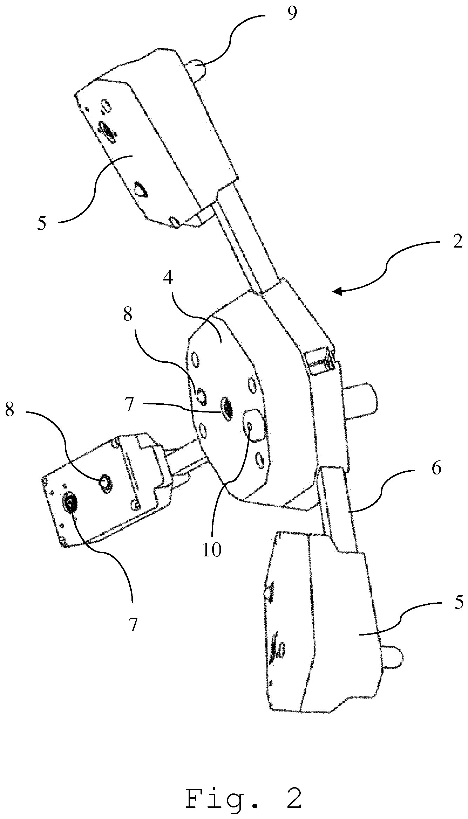

La figure 2 détaille un nœud 2 de la structure 1 de la figure 1. Ce nœud 2 est formé d'un appareillage photographique comprenant un boîtier 4 dit central, sensiblement hexagonal, et au moins un boîtier 5 dit satellite. Dans un exemple de réalisation, un nœud 2 comporte 3 boîtiers satellites 5. Les boîtiers satellites 5 sont reliés au boîtier central 4 par barres formant des tiges de liaison 6 amovibles. Les tiges de liaison 6 sont par exemple des tiges métalliques en aluminium sensiblement de même longueur, par exemple de 10 cm de longueur soit environ 1/3 de la longueur des barres amovibles. De même que pour les barres du premier groupe de barres formant des barres dites de liaison 3, les tiges 6 alimentent les boîtiers satellites 5 en courant électrique. A cet effet, les tiges de liaison 6 et les barres de liaison 3 sont tubulaires, creuses, et sont pourvues de câbles pour l'alimentation électrique. Les câbles sont munis, à leurs extrémités, de connecteurs mâle et/ou femelle. Ils sont positionnés à l'intérieur des tiges 6/barres 3.

De préférence, les boîtiers satellites 5 sont positionnés à égale distance du module central 4. Les tiges de liaison 6 forment entre elles des angles égaux. Lorsque le nœud 2 comporte trois boîtiers satellites, les tiges de liaison 6 forment donc entre elles des angles de 120°.

Chaque boîtier 4, 5 comporte au moins, du côté intérieur, un module photographique 7 et une source lumineuse 8 de type flash et, du côté extérieur, de préférence un témoin lumineux de statut 9. Le boîtier central 4 comporte en outre un module laser 10. Au total, la structure selon l'invention comporte au moins 50 et, préférentiellement entre 70 et 120 modules photographiques, un module photographique comprenant un capteur, pour une prise d'une image de l'objet selon un point de vue. La structure formant dodécaèdre selon le mode de réalisation illustré dans les figures comporte ainsi 80 modules photographiques (4 modules à chaque nœud), 80 LEDs flash, 80 LEDs de statut et 20 modules laser.

Les modules photographiques 7 sont par exemple des modules comprenant un capteur photographique de 8 mégapixels commercialisé par Sony™ sous la référence IMX219™.

Les sources lumineuses 8 sont par exemple formées d'une diode émettrice de lumière (LED) flash de haute puissance, par exemple de 3 W. Elles permettent, en les alimentant tour à tour et en prenant une photo de tous les points de vues situés autour, une acquisition précise de l'état de surface de la texture de l'objet et, notamment, sa brillance, ses propriétés de diffraction, ses micro-détails de surface.

Les sources lumineuses de statut 9 sont par exemple formées de LED dites RGB (Red, Green, Blue - rouge, vert, bleu) de 10 mm permettant d'indiquer l'état du module photographique 7 associé : allumé, éteint, connecté, en prise de vue, ou présentant un problème éventuel tel qu'un défaut de connexion au réseau WiFi™.

Les modules laser 10 sont par exemple des modules laser de longueur d'onde correspondant à la couleur verte de très faible puissance accompagnés d'une lentille de diffraction permettant de projeter un motif sur l'objet afin de garantir une bonne corrélation des images dans le calcul du modèle tridimensionnel.

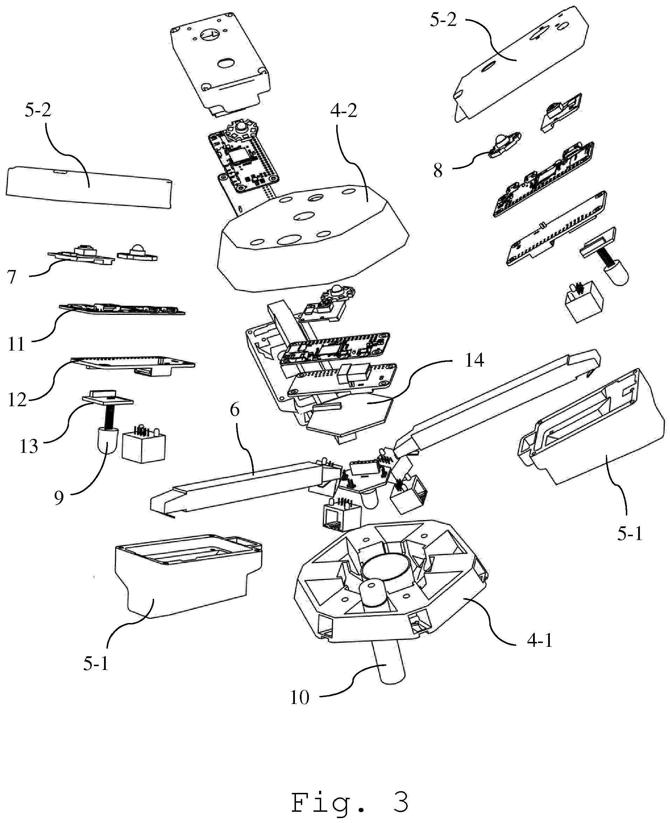

Ainsi que cela apparaît plus particulièrement à la figure 3, les boîtiers centraux 4 sont composés de deux parties, un corps de boîtier 4-1, et un capot 4-2. De même, les boîtiers satellites 5 sont composés de 2 parties, un corps 5-1 de boîtier, et un capot 5-2. Les boîtiers centraux 4 ont une forme générale sensiblement hexagonale tandis que les boîtiers satellites 5 ont une forme générale sensiblement rectangulaire. Dans un exemple, les boîtiers centraux 4 présentent une forme hexagonale de 12 cm de rayon et une épaisseur de 6 cm, et les boîtiers satellites 5 forment une structure sensiblement rectangulaire de 8 cm de longueur, de 4,5 cm de largueur et de 4,5 cm de hauteur.

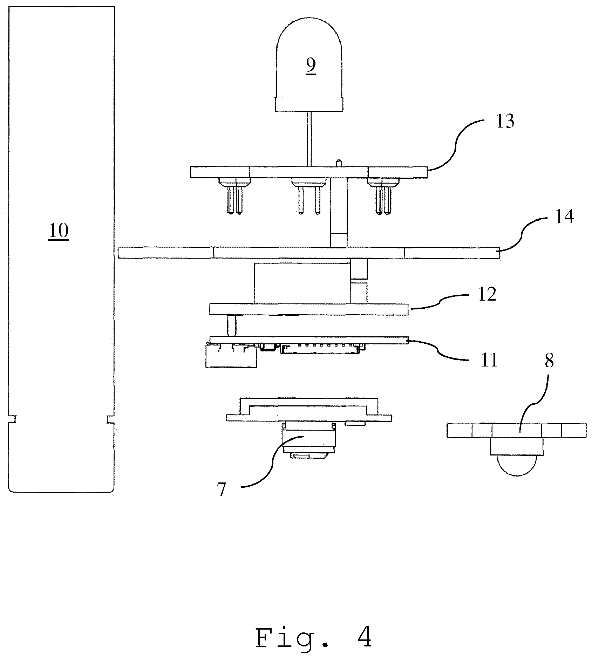

Si l'on se rapporte maintenant aux figures 3 et 4, il apparaît que les boîtiers 4, 5 renferment chacun un module photographique 7, une source lumineuse 8, une carte de contrôle 11 du module photographique, une carte 12 de communication USB (Universal Serial Bus - Bus Série Universel)/GPIO (General Purpose Input/Output-Entrée/Sortie d'Usage Général), et une carte réseau de puissance 13. En outre, les boitiers centraux 4 comprennent une carte de conversion électrique 14 et un module laser 10.

La carte de contrôle 11 est, dans un exemple, une carte généralement incluse dans les ordinateurs Raspberry Pi Zero™. Dans un autre exemple, il s'agit d'une carte plus puissante, telle que celle incluse dans les ordinateurs Raspberry Pi 3™. Dans un mode de réalisation des cartes différentes sont incluses dans les boîtiers centraux 4 et dans les boîtiers satellites 5. Les cartes Raspberry Pi Zero™ sont incluses dans les boîtiers satellites et dans les boîtiers centraux. Ces cartes présentes des dimensions réduites, de l'ordre de 30x65x5mm, ce qui s'avère idéal pour une intégration dans une structure selon l'invention. Les cartes 11 sont reliées au module photographique 7 par un ruban de liaison qui n'est pas représenté à la figure 3. Les modules photographiques sont par exemple des modules photographiques Raspberry Pi Module Camera v2™.

La carte de communication 12 porte notamment une puce Wifi™.

La carte réseau de puissance 13 assure la gestion de la puissance entre les différents éléments d'un boîtier et supporte la source lumineuse de statut 9.

La carte de conversion électrique 14 est sensiblement hexagonale et assure la gestion de la conversion du courant électrique afin que celui-ci soit adapté à la carte de contrôle 11, à la source lumineuse 8, et à la source lumineuse 10.

On notera que la forme dodécaédrique du système avec 20 nœuds comprenant chacun 1 boîtier central et 3 boîtiers satellites, chaque boîtier comprenant un module photographique, soit 80 modules répartis de manière régulière dans la structure, est une forme idéale, car elle permet l'acquisition de modèles selon 80 points de vue également répartis, avec un nombre minimum de barres/tiges de liaison. Lorsque les barres sont de 30 cm de longueur, le diamètre de la sphère contenant le dodécaèdre est d'environ 1 m. Un tel diamètre permet d'acquérir des modèles d'objet de 20 cm selon leur plus grande dimension. Pour des modèles plus grands, les barres de liaison 3 et les tiges de liaison 6 sont changées pour des barres de liaison 3 et des tiges de liaison 6 plus longues, mais le même nombre de nœuds est conservé. Les système est donc adaptable à des objets de dimensions plus importantes ou plus réduites. Les barres de liaison 3 sont interchangeables entres elles, de même que les tiges de liaison 6.

Pour l'acquisition d'un modèle tridimensionnels d'un objet, on procède selon les étapes suivantes.

On effectue le montage du système selon l'invention. A cet effet, on effectue tout d'abord le montage des nœuds 2. Les boîtiers centraux 4 sont interchangeables, de même que les boîtiers satellites 5. Autrement dit, les boîtiers 4, 5 peuvent être utilisés pour le montage de n'importe quel nœud 2 du système selon l'invention, dans n'importe quel ordre et quel que soit leur emplacement. Les nœuds 7 eux-mêmes peuvent être positionnés à n'importe quel emplacement dans la structure, qui présente par suite une grande modularité. Pour la réalisation des nœuds 7, on insère des premières extrémités des tiges de liaison 6 dans les boîtiers centraux 4, puis on insère les secondes extrémités de ces mêmes tiges de liaison 6 dans les boîtiers satellites 5. Les connections électriques pour l'alimentation électrique des boîtiers 4, 5 sont réalisées à l'insertion en butée des tiges de liaison 6 dans les boîtiers 4, 5 en utilisant les connecteurs mâle et/ou femelle disposés aux extrémités des câbles insérés dans les tiges de liaison 6, et des connecteurs associés des boîtiers 4, 5. Une fois que les nœuds 2 ont été montés, on relie lesdits nœuds 2 entre eux au moyen des barres de liaison 3. On obtient alors la structure souhaitée, polyédrique, notamment dodécaédrique.

L'objet dont on souhaite acquérir les données d'images, notamment un artéfact par exemple, est positionné dans le volume intérieur de la structure polyédrique obtenue, par exemple sur un support transparent lui-même positionné sur la base Wifi™.

Le système est mis sous tension. Un ordinateur est relié, de manière filaire, ou sans fil, à la base Wifi™. La base Wifi™ est elle-même connectée aux boîtiers 4, 5 au moyen de la puce Wifi™ qu'ils comportent. Une interface disponible sur l'ordinateur par l'intermédiaire par exemple d'un navigateur Internet permet alors de contrôler les différents éléments contenus dans les boîtiers 4, 5 et par suite de déclencher l'acquisition.

Une phase de calibration du système est initiée après chaque montage ou pour chaque série de mesures. Dans cette phase, des images sont susceptibles d'être acquises selon différents points de vues, en présence de flash, si cela s'avère opportun. Cette étape de calibration est nécessaire du fait de l'utilisation de pièces interchangeables lors du montage. Dans cette phase de calibration, la position des boîtiers est repérée dans la structure. Cette phase de calibration est réalisée au moyen d'un objet fourni avec la structure, et dont les caractéristiques sont connues.

On place l'objet dans le système. A l'issue de cette phase de calibration, la géométrie de l'objet est acquise. Pour cela, les modules laser 10 sont mis en fonction. Ils sont munis d'une lentille de diffraction. Ils projettent un maillage lumineux, par exemple de lumière verte sur l'objet, qui est photographié au moyen des modules photographiques 7 contenus dans les boîtiers centraux 4 et/ou les boîtiers satellites 5. Dans un exemple, pour l'acquisition de la géométrie, 80 photographies sont prises, une à partir de chaque module photographique 7 contenus dans les boîtiers 4, 5.

Les images correspondantes sont téléchargées dans l'ordinateur au travers du réseau Wifi™ généré par la base 15, et peuvent être transmises à un serveur distant.

L'acquisition de la texture de l'objet est initiée à la suite de l'acquisition de sa géométrie. Pour cela, des images sont acquises par les modules photographiques de l'ensemble des boîtiers 4, 5. Dans un exemple, pour l'acquisition de la texture de l'objet, 80 photographies sont prises, une à partir de chaque module photographique 7. Si cela s'avère opportun, l'ensemble des Flashs sont allumés au moment de la prise de vue.

L'acquisition de la réflectance de l'objet est une étape qui nécessite de nombreuses acquisitions d'images, selon différents points de vue, au moins 50, par exemple 80 et, en pratique entre 70 et 120 points de vue, selon différentes lumières incidentes. Par exemple, pour cette acquisition, 80 x 40 images sont acquises, soit 3 200 photographies. Les flashs sont allumés tour à tour, un par un. Pour chaque Flash allumé, on prend une image avec tous les modules photographiques situés dans l'hémisphère dont le flash est le sommet. Il en résulte l'acquisition, pour chaque point de vue d'environ 40 lumières incidentes.

La phase d'acquisition des images a une durée qui, dans un exemple, est de quelques minutes. Au cours de ces quelques minutes, des milliers de photographies sont acquises en séquence de manière automatisée par l'ensemble des 80 modules photographiques.

Les données d'images sont finalement téléchargées dans l'ordinateur puis communiquées à un serveur distant pour une reconstruction exacte du modèle tridimensionnel de l'objet, incluant sa géométrie, sa texture et, avantageusement, sa réflectance.

Le système de l'invention est démontable, les barres de liaison 3 et les tiges de liaison 6 étant amovibles, interchangeables, le système démonté étant transportable dans un ou plusieurs bagages. L'utilisation de barres de liaison 3 et tiges de liaison 6 différentes permettent d'adapter le système aux dimensions de l'objet à acquérir. Les boîtiers, les barres de liaison 3 et les tiges de liaison 6 sont susceptibles d'être disposés à différentes positions dans la structure, ce qui confère une grande modularité audit système.

## Revendications

1. Système de numérisation (1) pour l'acquisition de données d'images destinées à la réalisation de modèles tridimensionnels d'un objet par photogrammétrie incluant sa géométrie et sa texture, le système comprenant une structure géométrique tridimensionnelle délimitant un volume intérieur pour le positionnement de l'objet de manière fixe dans ledit volume, ladite structure géométrique comprenant au moins 50 modules photographiques (7) pour des acquisitions d'images photographiques de l'objet selon au moins 50 points de vue différents de l'objet, **caractérisé en ce que** le système comprend des nœuds (2) définissant des sommets de la structure en étant arrangés pour former un polyèdre, chaque nœud (2) comprenant un boîtier central (4) et au moins un boîtier satellite (5) relié audit boîtier central (4), chaque boîtier (4, 5) comprenant au moins un module photographique (7) et une source lumineuse (8), les nœuds (2) étant assemblés par des moyens d'assemblage (3) amovibles pour le montage et démontage du système (1).

2. Système selon la revendication 1, **caractérisé en ce que** chaque nœud (2) comprend un boîtier central (4) et trois boitiers satellites (5) qui sont équidistants du boîtier central (4) et qui sont positionnés sensiblement à égale distance l'un de l'autre.

3. Système selon l'une quelconque des revendications précédentes, **caractérisé en ce que** les modules centraux (4) comprennent en outre une seconde source lumineuse (10) .

4. Système selon l'une des quelconque revendications précédentes, **caractérisé en ce que** les moyens d'assemblage amovibles sont des barres (3) munies de moyens pour l'alimentation électrique des boîtiers, et d'une connectique associée.

5. Système selon l'une quelconque des revendications précédentes, **caractérisé en ce que** le polyèdre est un dodécaèdre régulier.

6. Système selon l'une quelconque des revendications précédentes, **caractérisé en ce que** les boîtiers satellites (5) sont reliés au boîtier central (4) par des tiges de liaison (6) amovibles, des connections électriques pour l'alimentation électrique des boîtiers étant réalisées à l'insertion en butée des tiges (6) dans les boîtiers (4) .

7. Procédé d'acquisition de données d'images destinées à la réalisation de modèles tridimensionnels d'un objet par photogrammétrie incluant la géométrie de l'objet et sa texture, par un système de numérisation (1) selon l'une quelconque des revendications précédentes, **caractérisé en ce qu'**il comprend les étapes suivantes selon lesquelles :
on positionne l'objet de manière fixe dans le volume intérieur délimité par ledit système de numérisation (1) ;
on acquiert la géométrie de l'objet ;
on acquiert la texture de l'objet ; et
on réalise le modèle tridimensionnel de l'objet.

8. Procédé selon la revendication 7, **caractérisé en ce qu'**on acquiert en outre la réflectance de l'objet.

## Patentansprüche

1. Digitalisierungssystem (1) zur Erfassung von Bilddaten, welche zur Erstellung von dreidimensionalen Modellen eines Objekts durch Photogrammetrie bestimmt sind, welche seine Geometrie und Struktur einschließen, wobei das System eine dreidimensionale geometrische Struktur umfasst, welche ein Innenvolumen zur festen Positionierung des Objekts in dem Volumen abgrenzt, wobei die geometrische Struktur mindestens 50 fotografische Module (7) zur Erfassungen von fotografischen Bildern des Objekts aus mindestens 50 unterschiedlichen Blickpunkten des Objekts umfasst, **dadurch gekennzeichnet, dass** das System Knoten (2) umfasst, welche Gipfel der Struktur definieren, indem sie zur Bildung eines Mehrecks angeordnet sind, wobei jeder Knoten (2) ein mittleres Gehäuse (4) und mindestens ein Satelliten-Gehäuse (5) umfasst, welches mit dem mittleren Gehäuse (4) verbunden ist, wobei jedes Gehäuse (4, 5) mindestens ein fotografisches Modul (7) und eine Lichtquelle (8) umfasst, wobei die Knoten (2) mithilfe von abnehmbaren Montagemitteln (3) zur Montage und Demontage des Systems (1) montiert sind.

2. System nach Anspruch 1, **dadurch gekennzeichnet, dass** jeder Knoten (2) ein mittleres Gehäuse (4) und drei Satellitengehäuse (5) in gleichem Abstand vom mittleren Gehäuse (4) umfasst, welche im Wesentlichen in gleichem Abstand voneinander positioniert sind.

3. System nach einem der vorhergehenden Ansprüche, **dadurch gekennzeichnet, dass** die mittleren Module (4) ferner eine zweite Lichtquelle (10) umfassen.

4. System nach einem der vorhergehenden Ansprüche, **dadurch gekennzeichnet, dass** die abnehmbaren Montagemittel Stangen (3) sind, welche mit Mitteln zur elektrischen Speisung der Gehäuse und mit einer zugeordneten Verbindungstechnik versehen sind.

5. Verfahren nach einem der vorhergehenden Ansprüche, **dadurch gekennzeichnet, dass** das Mehreck ein gleichmäßiges Zwölfeck ist.

6. System nach einem der vorhergehenden Ansprüche, **dadurch gekennzeichnet, dass** die Satellitengehäuse (5) mit dem mittleren Gehäuse (4) durch abnehmbare Verbindungsstäbe (6) verbunden sind, wobei elektrische Verbindungen zur elektrischen Speisung der Gehäuse während der Aufnahme der Stäbe (6) im Anschlag in den Gehäusen (4) hergestellt sind.

7. Verfahren zur Erfassung von Bilddaten, welche zur Herstellung von dreidimensionalen Modellen eines Objekts durch Photogrammetrie bestimmt sind, welche seine Geometrie und Struktur einschließen, durch ein Digitalisierungssystem (1) nach einem der vorhergehenden Ansprüche, **dadurch gekennzeichnet, dass** es folgende Schritte umfasst:
man positioniert das Objekt fest in dem inneren Volumen, welches durch das Digitalisierungssystem (1) abgegrenzt wird;
man erfasst die Geometrie des Objekts;
man erfasst die Struktur des Objekts; und
man erstellt das dreidimensionale Modell des Objekts.

8. Verfahren nach Anspruch 7, **dadurch gekennzeichnet, dass** man ferner das Reflexionsvermögen des Objekts erfasst.

## Claims

1. A digitalisation system (1) for acquiring image data intended for producing three-dimensional models of an object by photogrammetry, including its geometry and its texture, the system comprising a three-dimensional geometrical structure demarcating an internal volume for fixedly positioning the object inside said volume, said geometrical structure comprising at least 50 photographic modules (7) for acquiring photographic images of the object in at least 50 different viewpoints of the object, **characterised in that** the system comprises nodes (2) defining peaks of the structure while being arranged to form a polyhedron, each node (2) comprising a central housing (4) and at least one satellite housing (5) connected to said central housing (4), each housing (4, 5) comprising at least one photographic module (7) and a light source (8), the nodes (2) being assembled by detachable assembly means (3) for assembling and disassembling the system (1).

2. The system according to claim 1, **characterised in that** each node (2) comprises a central housing (4) and three satellite housings (5), which are equally spaced apart from the central housing (4) and which are substantially positioned at an equal distance from each other.

3. The system according to any one of the preceding claims, **characterised in that** the central modules (4) further comprise a second light source (10).

4. The system as claimed in any one of the preceding claims, **characterised in that** the detachable assembly means are bars (3) provided with means for electrically powering the housings and with associated connectors.

5. The system according to any one of the preceding claims, **characterised in that** the polyhedron is a regular dodecahedron.

6. The system according to any one of the preceding claims, **characterised in that** the satellite housings (5) are connected to the central housing (4) by detachable link rods (6), electrical connections for electrically powering the housings being generated when the rods (6) are fully inserted into the housings (4).

7. A method for acquiring image data intended for producing three-dimensional models of an object by photogrammetry, including the geometry of the object and its texture, using a digitalisation system (1) according to any one of the preceding claims, **characterised in that** it comprises the following steps, in which:
the object is fixedly positioned inside the internal volume demarcated by said digitalisation system (1);
the geometry of the object is acquired;
the texture of the object is acquired; and
the three-dimensional model of the object is produced.

8. The method according to claim 7, **characterised in that** the reflectance of the object is also acquired.
